# EUROPÄISCHE PATENTSCHRIFT

(11) **EP 1 048 379 B1**
(45) Veröffentlichungstag und Bekanntmachung des Hinweises auf die Patenterteilung: **16.11.2005**
(21) Anmeldenummer: 00108700.6
(22) Anmeldetag: 22.04.2000
(51) Int. Cl.: B22F 7/06, F16C 33/08

(54) **Verfahren zur Anordnung eines Einsatzteiles in einem Sinterteil**
Method for arranging an insert in a sintered article
Procédé pour le montage d'un insert dans un article fritté

(30) Priorität: 29.04.1999 DE 19919493
(43) Veröffentlichungstag der Anmeldung: 02.11.2000
(73) Patentinhaber: BT MAGNET-TECHNOLOGIE GMBH, D-44601 Herne (DE)
(72) Erfinder: Moellersmann, Bernhard, 45665 Recklinghausen (DE); Schneider, Rudolf, 58730 Froendenberg (DE)
(74) Vertreter: Behrens, Ralf Holger

(56) Entgegenhaltungen:
- DE-A- 3 007 008
- DE-C- 965 464
- US-A- 6 033 788

## Beschreibung

### Stand der Technik

Die Erfindung betrifft ein Verfahren zur Anordnung eines Einsatzteiles, insbesondere einer Buchse, in einem Sinterteil, welches im Verlauf seiner Herstellung den Zustand eines nachfolgend, insbesondere durch eine Wärmebehandlung, weiterzubearbeitenden Grünlings durchläuft.

Magnetkerne von elektromagnetischen Vorrichtungen, beispielsweise Aktoren, werden oftmals als Sinterteile hergestellt. Dabei kann ein magnetisierbares Pulvermaterial, z.B. ein magnetisierbares Metallpulver, dem ein Kunststoffmaterial beigemengt ist, mittels entsprechender Formwerkzeuge verpreßt werden, um einen zunächst mechanisch noch wenig belastbaren sogenannten Grünling zu erzeugen, der nachfolgend durch Wärmebehandlung unter zumindest teilweiser Aufschmelzung des Pulvermaterials bzw. von Bestandteilen des Pulvermaterials verfestigt wird.

Auf diese Weise können auch relativ kompliziert geformte Teile ohne größeren herstellungstechnischen Aufwand preisgünstig hergestellt werden.

Soweit auf das diese Weise hergestellte Sinterteil bei seinem Einsatz relativ zu anderen Teilen bewegt werden soll, muß regelmäßig berücksichtigt werden, daß das gesinterte Material mechanisch als Lagermaterial weniger geeignet ist, d.h. das Sintermaterial kann nicht ohne weiteres als Schale eines Wälzlagers oder als Reibpartner in einem Gleitlager eingesetzt werden.

Aus diesem Grund müssen im Sinterteil mechanisch entsprechend belastbare Einsatzteile, z.B. Buchsen, angeordnet sein.

### Vorteile der Erfindung

Die Erfindung beruht auf dem allgemeinen Gedanken, in den Grünling kunststoffbeschichtete Einsatzteile bzw. Buchsen einzusetzen und die Erweichung bzw. Aufschmelzung des Kunststoffes bei der Wärmebehandlung des Werkstückes zur festen Verbindung von Werkstück und Einsatzteil auszunutzen.

Insbesondere wenn das zur Herstellung des Werkstückes dienende Pulvermaterial ebenfalls einen unter Hitzeeinwirkung erweichenden bzw. schmelzenden Kunststoff enthält, ergibt sich ein besonders fester Verbund zwischen Einsatzteil bzw. Buchse und Sinterteil.

### Zeichnung

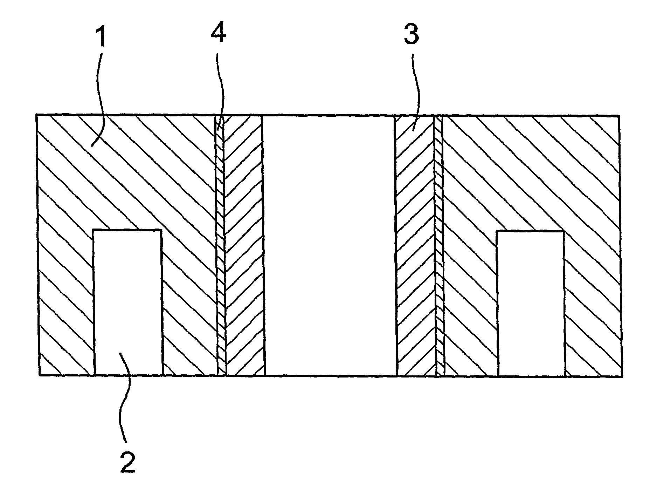

In der Zeichnung wird eine besonders bevorzugte Ausführungsform der Erfindung schematisiert dargestellt.

Dabei zeigt die einzige Figur ein Schnittbild eines Grünlings, in den eine außenseitig kunststoffbeschichtete Buchse eingesetzt ist.

Durch Verpressung von Pulvermaterial, welches einerseits aus magnetisierbaren Partikeln, insbesondere Metallpartikeln, und andererseit aus einem unter Hitze erweichenden bzw. aufschmelzenden Kunststoff besteht, kann mittels entsprechender Formwerkzeuge in grundsätzlich bekannter Weise ein sogenannter Grünling 1 gepreßt werden, welcher im dargestellten Beispiel als scheibenförmiger Ring mit einer tiefen Ringnut 2 auf der in der Zeichnung unteren Stirnseite ausgebildet ist.

In die Axialbohrung des Grünlings 1 ist im Beispiel der Zeichnung eine Buchse 3 eingeschoben, welche außenseitig mit einer bei Erhitzung erweichenden bzw. aufschmelzenden Kunststoffschicht 4 versehen ist. Dabei kann die Buchse 3 mit der Kunststoffbeschichtung 4 so bemessen sein, daß ein schwacher Preßsitz innerhalb des Grünlings 1 gegeben ist.

Durch Wärmebehandlung können nun das Kunststoffmaterial des Grünlings 1 sowie die Kunststoffschicht 4 der Buchse 3 aufgeschmolzen bzw. erweicht werden, so daß nach Erkaltung des Kunststoffmaterials ein besonders fester Sitz der Buchse 3 erreicht wird.

Vorzugsweise werden solche Kunststoffmaterialien eingesetzt, die erst bei vergleichsweise hoher Temperatur, z.B. 240°C bis 310°C, weich werden bzw. aufschmelzen. Auf diese Weise läßt sich ein thermisch hochbelastbares Bauteil herstellen.

Vorzugsweise handelt es sich bei dem im Grünling 1 enthaltenen Kunststoffmaterial um das gleiche oder ein ähnliches Kunststoffmaterial wie beim Material der Kunststoffbeschichtung 4 der Buchse 3. Auf diese Weise kann eine besonders homogene Verankerung der Buchse 3 im Werkstück erreicht werden.

## Patentansprüche

1. Verfahren zur Anordnung eines Einsatzteiles in einem Sinterteil, welches im Verlauf seiner Herstellung den Zustand eines auszuhärtenden Grünlings (1) durchläuft und wobei der Grünling (1) einerseits aus magnetisierbaren Partikeln und andererseits aus Kunststoffmaterial besteht, **dadurch gekennzeichnet, dass** das eine Kunststoffbeschichtung (4) aufweisende Einsatzteil (3) in den Grünling (1) eingebracht und sodann zusammen mit dem Grünling unter Aushärtung des den Grünling bildenden Materials sowie unter Verbindung von Einsatzteil (3) und Material des Grünlings wärmebehandelt wird.

2. Verfahren nach Anspruch 1, **dadurch gekennzeichnet, daß** das Material des Grünlings (1) sowie die Kunststoffbeschichtung (4) gleichartige oder identische Kunststoffe enthalten.

3. Verfahren nach Anspruch 1 oder 2, **dadurch gekennzeichnet, daß** die Wärmebehandlung bei 240°C bis 310°C erfolgt.

4. Verfahren nach einem der Ansprüche 1 bis 3, **dadurch gekennzeichnet, dass** das Einsatzteil eine Buchse ist.

## Claims

1. Method for arranging an insert in a sintered article which, during its production, passes through the state of a powder preform (1) which is to be hardened, the powder preform (1) comprising firstly magnetizable particles and secondly plastic material, **characterized in that** the insert (3), which has a plastic coating (4), is introduced into the powder preform (1) and is then heat-treated together with the powder preform so as to harden the material which forms the powder preform and to join the insert (3) and the material of the powder preform.

2. Method according to Claim 1, **characterized in that** the material of the powder preform (1) and the plastic coating (4) contain similar or identical plastics.

3. Method according to Claim 1 or 2, **characterized in that** the heat treatment is carried out at from 240°C to 310°C.

4. Method according to one of Claims 1 to 3, **characterized in that** the insert is a bush.

## Revendications

1. Procédé de montage d'un insert dans une pièce frittée, qui passe au cours de sa fabrication par l'état d'une ébauche à durcir (1), et l'ébauche (1) se composant d'une part de particules magnétisables et d'autre part d'une matière plastique,
**caractérisé en ce que**
l'insert (3) présentant un revêtement en matière plastique (4) est mis en place dans l'ébauche (1) et est ensuite traité thermiquement conjointement avec l'ébauche, avec durcissement du matériau de l'ébauche et formation d'une liaison entre l'insert (3) et le matériau de l'ébauche.

2. Procédé selon la revendication 1,
**caractérisé en ce que**
le matériau de l'ébauche (1) ainsi que le revêtement en matière plastique (4) contiennent des matières plastiques similaires ou identiques.

3. Procédé selon la revendication 1 ou 2,
**caractérisé en ce que**
le traitement thermique s'effectue à des températures comprises entre 240°C et 310°C.

4. Procédé selon l'une des revendications 1 à 3,
**caractérisé en ce que**
l'insert est un manchon.
